(19) Europäisches Patentamt
European Patent Office
Office européen des brevets

(11) **EP 3 508 314 A1**

(12) **EUROPEAN PATENT APPLICATION**
published in accordance with Art. 153(4) EPC

(43) Date of publication:
**10.07.2019 Bulletin 2019/28**

(51) Int Cl.:
**B25J 13/00** *(2006.01)*      **B65G 61/00** *(2006.01)*

(21) Application number: **17858174.0**

(86) International application number:
**PCT/JP2017/033250**

(22) Date of filing: **14.09.2017**

(87) International publication number:
**WO 2018/066335 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.10.2016  JP 2016198386**

(71) Applicants:
• **Kabushiki Kaisha Toshiba**
  **Minato-ku**
  **Tokyo 105-8001 (JP)**

• **Toshiba Infrastructure Systems & Solutions Corporation**
  **Kawasaki-shi, Kanagawa 212-8585 (JP)**

(72) Inventor: **NAKAMOTO, Hideichi**
  **Tokyo 105-8001 (JP)**

(74) Representative: **Horn Kleimann Waitzhofer Patentanwälte PartG mbB**
  **Ganghoferstrasse 29a**
  **80339 München (DE)**

(54) **TRANSPORT DEVICE, TRANSPORT METHOD, AND TRANSPORT PROGRAM**

(57)      A transport device according to an embodiment includes a holder, a driver, a force sensor, a first acquirer, and a controller. The holder holds cargo. The driver, which is a driver connected to the holder, moves the holder. The force sensor, provided in the vicinity of a connection location where the holder and the driver are connected to each other, detects a force applied to the vicinity of the connection location. The first acquirer acquires holding information indicating a holding state of the holder holding the cargo. The controller transports the cargo to the driver in a case where it is determined that the driver is caused to transport the cargo, on the basis of holding information indicating a holding state of the holder which is acquired by the first acquirer and detection results of the force sensor.

FIG. 3

## Description

TECHNICAL FIELD

An embodiment of the invention relates to a transport device, a transport method, and a transport program.

BACKGROUND ART

In recent years, transport devices that automatically take out cargo from a palette in which a large number of pieces of cargo are loaded and transport the taken-out cargo have become known. The transport devices detect the position and posture of cargo from an image captured by an imaging device, and hold and transport the cargo using a robot arm or the like.

CITATION LIST

PATENT LITERATURE

PATENT LITERATURE 1
Japanese Unexamined Patent Application, First Publication No. 2007-130711

SUMMARY OF INVENTION

TECHNICAL PROBLEM

However, in the devices of the related art, cargo may be transported in an unstable cargo holding state. A problem to be solved by the invention is to provide a transport device capable of transporting cargo in a stable holding state, a transport method, and a transport program.

SOLUTION TO PROBLEM

A transport device according to an embodiment includes a holder, a driver, a force sensor, a first acquirer, and a controller. The holder holds a piece of cargo. The driver, which is a driver connected to the holder, moves the holder. The force sensor, provided in the vicinity of a connection location where the holder and the driver are connected to each other, detects a force applied to the vicinity of the connection location. The first acquirer acquires holding information indicating a holding state of the holder holding the cargo. The controller causes the driver to transport the cargo in a case where it is determined that the driver is caused to transport the cargo, on the basis of holding information indicating a holding state of the holder which is acquired by the first acquirer and detection results of the force sensor.

BRIEF DESCRIPTION OF DRAWINGS

Fig. 1 is a configuration diagram of a transport device 1.
Fig. 2 is a diagram illustrating examples of an arm 12 and a holder 13 according to an embodiment.
Fig. 3 is a functional configuration diagram focusing on a control device 40.
Fig. 4 is a flowchart illustrating a flow of processing executed by the control device 40.
Fig. 5 is a diagram illustrating an example of a determination map 92.
Fig. 6 is a diagram illustrating a position based on the center of gravity.
Fig. 7 is a diagram illustrating a holding state determination process (processes of step S104 to step S110).
Fig. 8 is a diagram illustrating a holding state determination process (processes of step S112 to step S118).
Fig. 9 is a flowchart illustrating a flow of a transport process.
Fig. 10 is a diagram illustrating a state where a piece of cargo M is transported along a track for avoiding contact with an object.

DESCRIPTION OF EMBODIMENTS

Hereinafter, a transport device, a transport method, and a transport program according to an embodiment will be described with reference to the accompanying drawings. Illustration and description will be performed using an XYZ coordinate system as necessary.

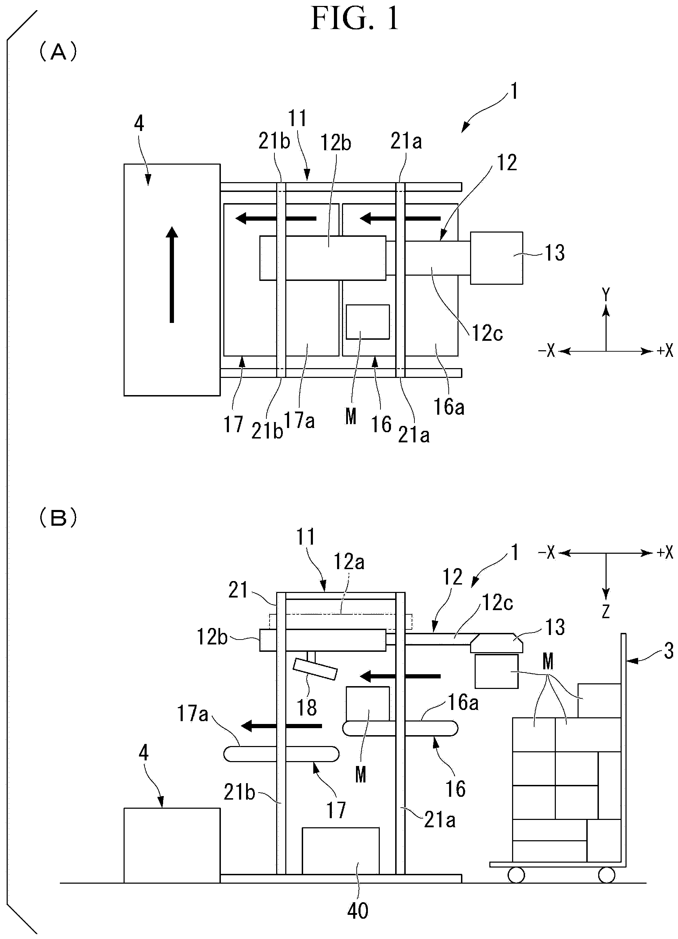

Fig. 1 is a configuration diagram of a transport device 1. Fig. 1(A) is a plan view of the transport device 1. Fig. 1(B) is a side view of the transport device 1. The transport device 1 illustrated in Fig. 1 may be, for example, automatic unloading device. For example, the transport device 1 automatically takes out a piece of cargo M disposed on a box palette 3 and transports the taken-out cargo M to a predetermined position such as on a belt conveyor 4. The transport device 1 and the belt conveyor 4 are fixed to, for example, a floor. In addition, the transport device 1 and the belt conveyor 4 may be movable using wheels, a rail, or the like.

Here, for convenience of description, a +X-direction, a -X-direction, a Y-direction, and a Z-direction will be defined. For example, the +X-direction, the -X-direction, and the Y-direction are directions along a substantially horizontal plane. The +X-direction is a direction from the transport device 1 to the box palette 3. The -X-direction is a direction opposite to the +X-direction. The Y-direction is a direction intersecting the +X-direction (for example, a substantially orthogonal direction). The Z-direction is a direction intersecting the X-direction and the Y-direction (for example, a substantially orthogonal direction) and is, for example, a direction substantially vertically downward. The terms "upstream" and "downstream" in the following description mean "upstream" and "downstream" in a transport direction of the piece of cargo M.

As illustrated in Fig. 1, the transport device 1 includes a base 11, an arm 12 (driver), a holder 13, a first conveyor 16, a second conveyor 17, a cargo detector 18, and a control device 40.

The base (main body frame) 11 is installed on a floor. The base 11 includes a plurality of supports 21 extending in the Z-direction. For example, the support 21 may be formed in the form of a frame. The plurality of supports 21 include a pair of first supports 21a and a pair of second supports 21b. The pair of first supports 21a are disposed separately on both sides of the first conveyor 16 in the Y-direction. The pair of second supports 21b are disposed separately on both sides of the second conveyor 17 in the Y-direction.

The arm 12 is, for example, an orthogonal robot arm and is an example of a multi-joint arm. A multi-joint arm is an arm in which a plurality of arms are connected to each other, a plurality of connected portions (joints) are provided, and each of the joints can be driven. The arm 12 is connected to the base 11. For example, the arm 12 includes a first member 12a, a second member 12b, and a third member 12c. The first member 12a is guided to a guide provided in the base 11 so as to be movable (liftable) in the Z-direction. The second member 12b is supported and guided by the first member 12a so as to be movable in the Y-direction. The third member 12c is supported and guided by the second member 12b so as to be movable in the +X-direction and the -X-direction. The holder 13 to be described later is attached to a tip portion of the arm 12. The arm 12 moves the holder 13 to desired positions in the +X-direction (-X-direction), the Y-direction, and the Z-direction.

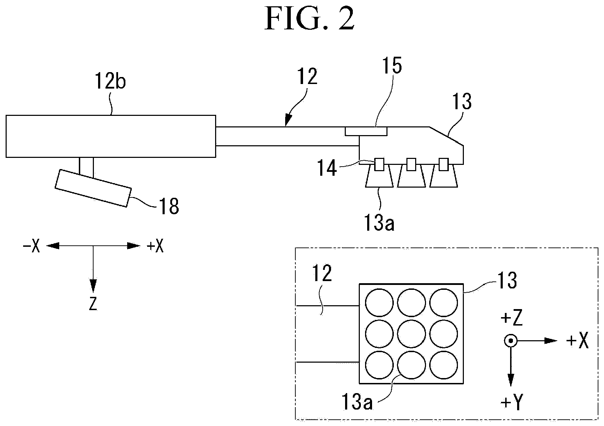

Fig. 2 is a diagram illustrating examples of the arm 12 and the holder 13 according to the embodiment. The holder 13 is an end effector capable of holding the piece of cargo M. The holder 13 includes, for example, a plurality of adhesive discs 13a and an electromagnetic valve. The plurality of adhesive discs 13a are connected to a vacuum pump. The electromagnetic valve controls an adsorption operation of the adhesive discs 13a. The holder 13 holds (grips) the piece of cargo M by vacuum adsorption of the adhesive discs 13a in contact with the piece of cargo M. In the example illustrated in the drawing, the number of adhesive discs 13a is nine (three adhesive discs in the X-direction by three adhesive discs in the Y-direction).

In addition, each of the plurality of adhesive discs 13a is provided with a pressure sensor 14. The pressure sensor 14 detects a pressure (the degree of vacuum) in the adhesive discs 13a and outputs a detection result to the control device 40.

In addition, a force sensor 15 is provided in the vicinity of a connection location between the arm 12 and the holder 13. The force sensor 15 detects a force applied to the holder 13 and the arm 12 (a force applied to the vicinity of a connection location) using a strain gauge system, a capacitance system, or the like. The force sensor 15 detects, for example, translational force components in three axial directions (X, Y, and Z-directions) and moment components around the translational force components and outputs detection results to the control device 40.

The holder 13 is moved toward the box palette 3 by the movement of the arm 12 and holds the piece of cargo M disposed on the box palette 3. In addition, the holder 13 is moved by the movement of the arm 12 to transport the held piece of cargo M to the first conveyor 16. The holder 13 moves the piece of cargo M to the first conveyor 16 and then terminates the holding of the piece of cargo M. Thereby, the transport device 1 moves the piece of cargo M disposed on the box palette 3 to the first conveyor 16.

Description will return to Fig. 1. The cargo detector 18 is, for example, a camera that captures an image. The cargo detector 18 is provided on the surface of the arm 12 (second member 12b) on the Z-direction side. In addition, the cargo detector 18 is installed such that a range in the Z-direction from the holder 13, which is also in a range in the +X-direction from the holder 13, is set to be an imaging range. Thereby, the cargo detector 18 captures an image of the piece of cargo M loaded on the box palette 3.

The first conveyor 16 is positioned between the box palette 3 and the belt conveyor 4 in the -X-direction. The first conveyor 16 is provided in the base 11 and positioned below at least a portion of the arm 12. The first conveyor 16 is connected to the base 11 and supported by the base 11.

The first conveyor 16 is, for example, a belt conveyor which is positioned in a direction vertically downward from the arm 12. The first conveyor 16 includes a transport surface (top face) 16a moving toward the belt conveyor 4.

The first conveyor 16 is a lift conveyor which is movable in the Z-direction. For example, the first conveyor 16 is guided to a guide provided in the first support 21a of the base 11 so as to be movable (liftable) in the Z-direction.

The second conveyor 17 is positioned between the first conveyor 16 and the belt conveyor 4 in the -X-direction. The second conveyor 17 is provided in the base 11 and positioned below at least a portion of the arm 12. The second conveyor 17 is connected to the base 11 and supported by the base 11.

The second conveyor 17 is, for example, a belt conveyor positioned in a direction vertically downward from the arm 12. The second conveyor 17 includes a transport surface (top face) 17a moving toward the belt conveyor 4. The second conveyor 17 is positioned on a downstream side of the first conveyor 16. In addition, the belt conveyor 4 is positioned on a downstream side of the second conveyor 17.

The second conveyor 17 is a lift conveyor which is movable in the Z-direction, independently of the first conveyor 16. For example, the second conveyor 17 is guided to a guide provided in the second support 21b of the base 11 so as to be movable (liftable) in the Z-direction.

Operations of the first conveyor 16 and the second conveyor 17 will be described. (1) The first conveyor 16 is moved to a desired position in the Z-direction in accordance with the height of the pieces of cargo M loaded into the box palette 3 (the height of the pieces of cargo M transported by arm 12) and receives the pieces of cargo M transported by arm 12. (2) The second conveyor 17 is controlled so that the height of the second conveyor 17 is aligned with the height of the first conveyor 16. (3) The first conveyor 16 transports the pieces of cargo received from the arm 12 in the -X-direction. (4) The second conveyor 17 receives the pieces of cargo M transported by the first conveyor 16. (5) The second conveyor 17 is controlled so that the height of the second conveyor 17 is matched to the height of the belt conveyor 4. (6) The second conveyor 17 transports the pieces of cargo M received from the first conveyor 16 to the belt conveyor 4. In this manner, the pieces of cargo M in the box palette 3 are transported to the belt conveyor 4.

In addition, each of the first conveyor 16 and the second conveyor 17 is not limited to a belt conveyor. Each of the first conveyor 16 and the second conveyor 17 may be a roller conveyor constituted by a plurality of rollers which are actively rotated.

The transport device 1 according to the embodiment includes two conveyers including the first conveyor 16 and the second conveyor 17, but is not limited thereto. The transport device may include one conveyor. In this case, the transport device 1 disposes the piece of cargo M transported by the holder 13 in one conveyor and discharges the piece of cargo M to the belt conveyor 4 using one conveyor.

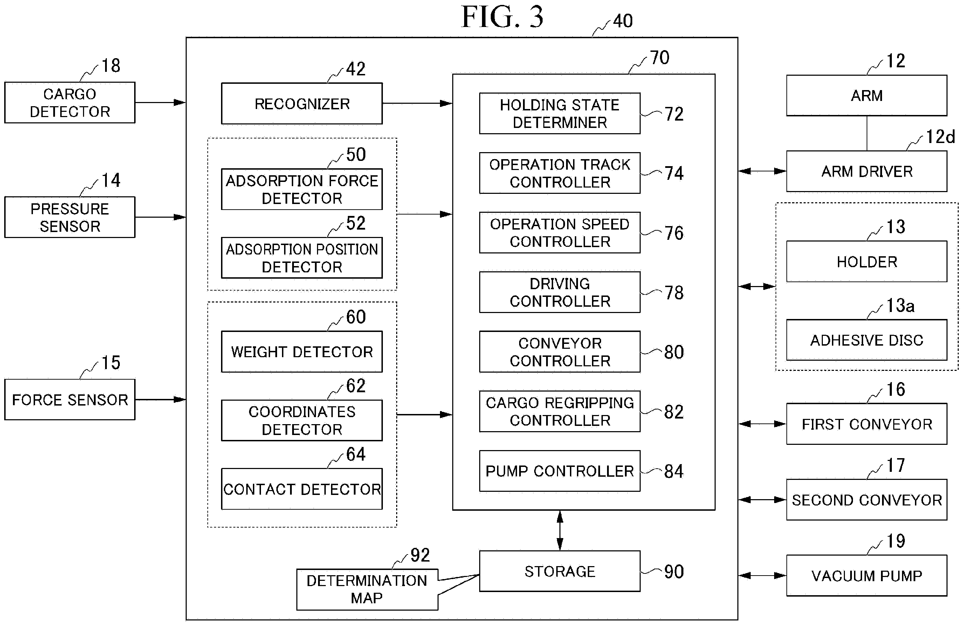

Fig. 3 is a functional configuration diagram focusing on the control device 40. The control device 40 includes, for example, a recognizer 42, an adsorption force detector 50, an adsorption position detector 52, a weight detector 60, a coordinates detector 62, a contact detector 64, a controller 70, and a storage 90. The adsorption force detector 50 and the adsorption position detector 52 are examples of "a first acquirer", the weight detector 60 is an example of "a second acquirer", and the coordinates detector 62 is an example of "a third acquirer". The contact detector 64 is an example of "a detector".

Some or all of the recognizer 42, the adsorption force detector 50, the adsorption position detector 52, the weight detector 60, the coordinates detector 62, the contact detector 64, and the controller 70 may be implemented by a processor such as a central processing unit (CPU) executing a program. In addition, some or all of these functional units may be implemented by hardware such as a large scale integration (LSI), an application specific integrated circuit (ASIC), or a field-programmable gate array (FPGA). For example, the storage 90 is realized by a non-volatile storage medium such as a read only memory (ROM), a flash memory, a hard disk drive (HDD), or an SD card and a volatile storage medium such as a random access memory (RAM) or a register. The storage 90 stores a program executed by a processor, a determination map 92 to be described later, and the like.

The recognizer 42 performs a recognition process on an image captured by the cargo detector 18 to identify the position of the piece of cargo M in the image. In addition, the recognizer 42 converts the position of the piece of cargo M in the image into a position in a real space and outputs information of the converted position to the controller 70.

The adsorption force detector 50 detects a holding force of the holder 13. The holding force of the holder 13 is, for example, a vacuum adsorption force (adsorption force) of the adhesive discs 13a in contact with the piece of cargo M. The adsorption position detector 52 detects an adsorption center position where the holder 13 holds the piece of cargo M. The adsorption center position is a center position in a target region when a region including the adhesive discs 13a adsorbing the piece of cargo M is set to be the target region. The adsorption position detector 52 determines that an adhesive disc 13a having a pressure lower (a degree of vacuum higher) than a reference value by a predetermined level or more is an adhesive disc 13a adsorbing the piece of cargo M on the basis of, for example, detection results of the pressure sensor 14 to identify an adsorption center position of the target region including the adhesive discs 13a. In addition, the same function as that of the adsorption force detector 50 or the adsorption position detector 52 may be included in the pressure sensor 14.

The weight detector 60 acquires the weight of the piece of cargo M on the basis of detection results of the force sensor 15. The coordinates detector 62 detects two-dimensional coordinates of the center of gravity of the piece of cargo M in the upper surface on the basis of detection results of the force sensor 15. The two-dimensional coordinates indicate a position where the center of gravity of the piece of cargo M is approximately projected onto the top surface of the piece of cargo M. The coordinates detector 62 detects two-dimensional coordinates on the basis of, for example, the translational force components and the moment components which are acquired from the force sensor 15. The two-dimensional coordinates are an example of "a position based on the center of gravity". The contact detector 64 detects a force applied to the holder 13 from the outside on the basis of detection results of the force sensor 15 and estimates (acquires) the position on an object to which the detected force is applied. In addition, the same function as that of the weight detector 60, the coordinates detector 62, or the contact detector 64 may be included in the force sensor 15.

The controller 70 includes, for example, a holding state determiner 72, an operation track controller 74, an operation speed controller 76, a driving controller 78, a conveyor controller 80, a cargo regripping controller 82, and a pump controller 84.

The holding state determiner 72 determines whether or not the arm 12 is caused to transport the piece of cargo M, on the basis of a holding state where the holder 13 is holding the piece of cargo M and detection results of the force sensor 15. The holding information indicating a holding state is information of a holding force when the holder 13 is holding the piece of cargo M or (either or both of) information of a range over which the holder 13 and the piece of cargo M are in contact with each other. The range over which the holder 13 and the piece of cargo M are in contact with each other is, for example, a range of the adhesive discs 13a adsorbing the piece of cargo M (a range over which the plurality of adhesive discs 13a are adsorbing the piece of cargo M in a case where the piece of cargo M is adsorbed by the plurality of adhesive discs 13a). In addition, a range over which the holder 13 and the piece of cargo M are in contact with each other may be the range of the piece of cargo M which is adsorbed by the adhesive discs 13a in the piece of cargo M recognized by an image.

Specifically, the holding state determiner 72 compares the weight of the piece of cargo M and a holding force of the holder 13 with each other to determine whether or not the arm 12 is caused to transport the piece of cargo M using the holding force of the holder 13. In addition, the holding state determiner 72 compares a position based on the center of gravity of the piece of cargo M and a range over which the holder 13 and the piece of cargo M are in contact with each other (or an adsorption center position) to determine whether or not the piece of cargo M is transported in a state where the range over which the holder 13 and the piece of cargo M are in contact with each other is maintained.

The operation track controller 74 generates a track for the holder 13 to transport the piece of cargo M to the first conveyor 16. The operation speed controller 76 determines a speed at which the holder 13 is to be transported. The operation speed controller 76 determines a speed at which the arm 12 transports the piece of cargo M on the basis of, for example, the weight of the piece of cargo M, holding information indicating a holding state where the holder 13 is holding the piece of cargo M, and the like. For example, in a case where the weight of the piece of cargo M is large, the operation speed controller 76 determines a speed to be lower than in a case where the weight of the piece of cargo M is small. Further, for example, the operation speed controller 76 may determine a speed to be higher in a case where the holding force of the holder 13 is large than in a case where the holding force is small. In addition, the operation speed controller 76 may determine a speed to be lower in a case where the holding force of the holder 13 is small than in a case where the holding force is large. For example, in a case where the position based on the center of gravity of the piece of cargo M and the adsorption center position are far from each other, the operation speed controller 76 may determine a speed to be lower than in a case where the position based on the center of gravity of the piece of cargo M and the adsorption center position are close to each other.

In a case where it is determined that the piece of cargo M is transported by the holding state determiner 72, the driving controller 78 controls an arm driver 12d connected to the arm 12 and driving the arm 12 such that the arm 12 is driven on the basis of the track determined by the operation track controller 74 and the speed determined by the operation speed controller 76. In addition, the driving controller 78 controls the arm driver 12d so as to drive the arm 12 on the basis of the track generated by the cargo regripping controller 82 to be described later. The conveyor controller 80 controls a first conveyor driving mechanism (not shown) such that the first conveyor 16 is moved in a predetermined direction. The conveyor controller 80 controls a second conveyor driving mechanism (not shown) so as to move the second conveyor 17 in a predetermined direction.

In a case where it is determined that the piece of cargo M is not transported by the holding state determiner 72, the cargo regripping controller 82 generates a track for terminating the holding of the piece of cargo M and then holding the piece of cargo M again. Specifically, the cargo regripping controller 82 brings a reference position (for example, an adsorption center position) in a range over which the holder 13 and the piece of cargo M are in contact with each other after the holding of the cargo is terminated closer to a position based on the center of gravity of the piece of cargo M in a horizontal direction than to a reference position in a range over which the holder 13 and the piece of cargo M are in contact with each other before the holding of the cargo is terminated, and then holds the piece of cargo M again. In addition, the cargo regripping controller 82 outputs the generated track to the driving controller 78.

The pump controller 84 controls the vacuum pump 19 sucking in air in the vicinity of the adhesive discs 13a to adjust a pressure in the adhesive discs 13a. The pump controller 84 controls the output of the vacuum pump 19 on the basis of, for example, the weight of the piece of cargo M and holding information indicating a holding state where the holder 13 is holding the piece of cargo M. For example, the pump controller 84 may determine the output of the vacuum pump 19 to be larger in a case where the weight of the piece of cargo M is large than in a case where the weight of the piece of cargo M is small, and may determine the output of the vacuum pump 19 to be smaller in a case where the weight of the piece of cargo M is small than in a case where the weight of the piece of cargo M is large.

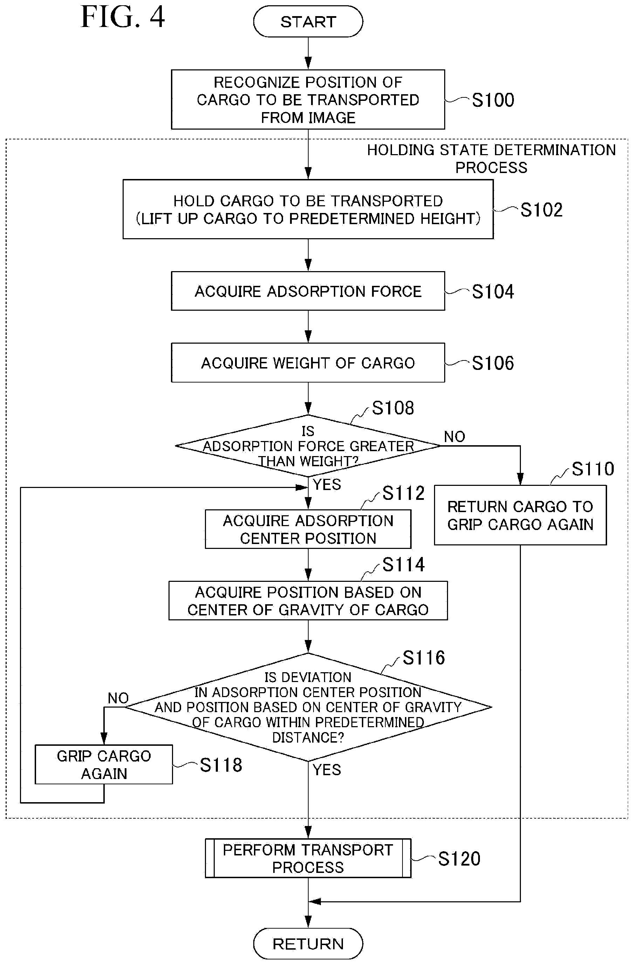

Fig. 4 is a flowchart illustrating a flow of processing (holding state determination process) executed by the control device 40. First, the recognizer 42 recognizes the position of the piece of cargo M to be transported, on the basis of an image captured by the cargo detector 18 (step S100). Next, the controller 70 holds the piece of cargo M to be transported, on the basis of a recognition result of the recognizer 42 (step S102). For example, the driving controller 78 controls the arm driver 12d so as to bring the adhesive discs 13a close to the piece of cargo M from the upper surface of the piece of cargo M and bring the upper surface of the piece of cargo M and the adhesive discs 13a into contact with each other. Next, the pump controller 84 controls the vacuum pump 19 so as to generate an adsorption force in the adhesive discs 13a and hold the piece of cargo M. In addition, the driving controller 78 controls the arm driver 12d so as to lift up the piece of cargo M to a predetermined height (approximately several centimeters in a direction vertically upward) while holding the piece of cargo M.

Next, the adsorption force detector 50 acquires an adsorption force which is a force for adsorbing the piece of cargo M generated in the adhesive discs 13a from the pressure sensor 14 (step S104). Next, the weight detector 60 acquires the weight of the piece of cargo M from the force sensor 15 (step S106). Next, the holding state determiner 72 compares the adsorption force acquired in step S104 and the weight acquired in step S106 to determine whether or not the adsorption force is sufficiently large (step S108).

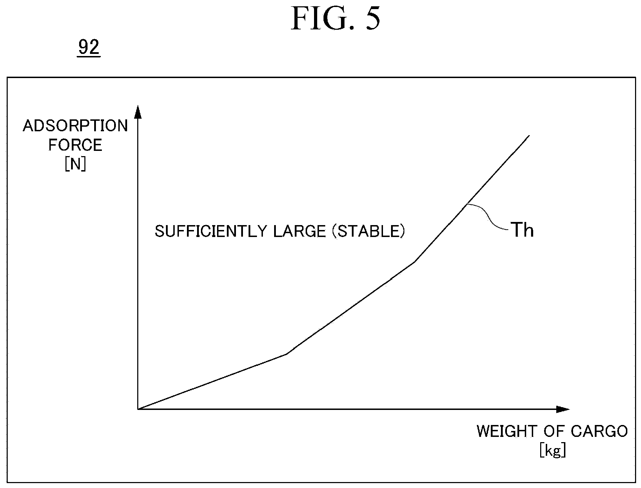

For example, the holding state determiner 72 determines whether or not the adsorption force is sufficiently large, using the determination map 92 stored in the storage 90. Fig. 5 is a diagram illustrating an example of the determination map 92. In the drawing, the vertical axis represents an adsorption force P [N] and the horizontal axis represents the weight W [kg] of cargo. The adsorption force P is calculated by the following Expression (1). "DT" is a pressure (the degree of vacuum) [Pa] detected by a pressure sensor, and "S" is a cross-sectional area [m$^2$] of the adhesive disc 13a. "N" is the number of adhesive discs 13a which are in contact with the piece of cargo M.

$$P = DT \times S \times 0.1 \times N \ldots (1)$$

In addition, the above-described Expression (1) may be changed as shown in Expression (1-1). "1/n" is a safety rate which is set in advance.

$$P = DT \times S \times 0.1 \times (1/n) \times N \ldots (1\text{-}1)$$

As illustrated in the drawing, in a case where the adsorption force P is equal to or greater than a threshold value Th, it is determined that the adsorption force P is sufficiently large. That is, it is determined that a holding state is stable. The threshold value Th is, for example, a value obtained by adding a surplus adsorption force (a surplus adsorption force α) to a force ("F") required to transport the piece of cargo M having a weight W at a set speed. The threshold value Th is expressed by, for example, the following Expression (2).

$$Th = F + \alpha \ldots (2)$$

The threshold value Th is set in response to the weight of the piece of cargo MW. The threshold value Th is set to be larger when the weight W of the cargo increases. For example, when the weight W of the cargo increases, the surplus adsorption force α is set to be larger. Since the surplus adsorption force α is set in this manner, transport in an unstable holding state with respect to a piece of heavy cargo M and dropping of a piece of heavy cargo M are inhibited. This is because it is necessary to further reduce a risk of dropping due to a possibility that the heavy cargo M and cargo M located at a dropping position, and the like may be damaged when the heavy cargo M drops.

The processing proceeds to the process of step S112 when the adsorption force is sufficiently large, and the controller 70 returns the piece of cargo M to a position where the piece of cargo M is disposed in order to hold the piece of cargo M again when the adsorption force is not sufficiently large (step S110). In addition, the processing may proceed to the process of step S102 after the process of step S110.

In addition, a position where the piece of cargo M is held by the holder 13 after the process of step S110 (for example, in step S102 after step S110) and a position where the piece of cargo M was held by the holder 13 last time may be different positions. For example, the controller 70 may cause the holder 13 to hold the piece of cargo M by shifting a position where the holder 13 holds the piece of cargo M each time by a predetermined distance (for example, several centimeters) in the horizontal direction with respect to the position where the piece of cargo M was held last time. For example, an adsorption force may be reduced due to irregularities in the top face of the piece of cargo M and a gap generated between the adhesive discs 13a and the piece of cargo M, but the gap is reduced due to the shifted holding position and the adsorption force is increased.

When the adsorption force is sufficiently large, the adsorption position detector 52 acquires an adsorption center position (step S112). Next, the coordinates detector 62 acquires a position based on the center of gravity of the piece of cargo M (step S114).

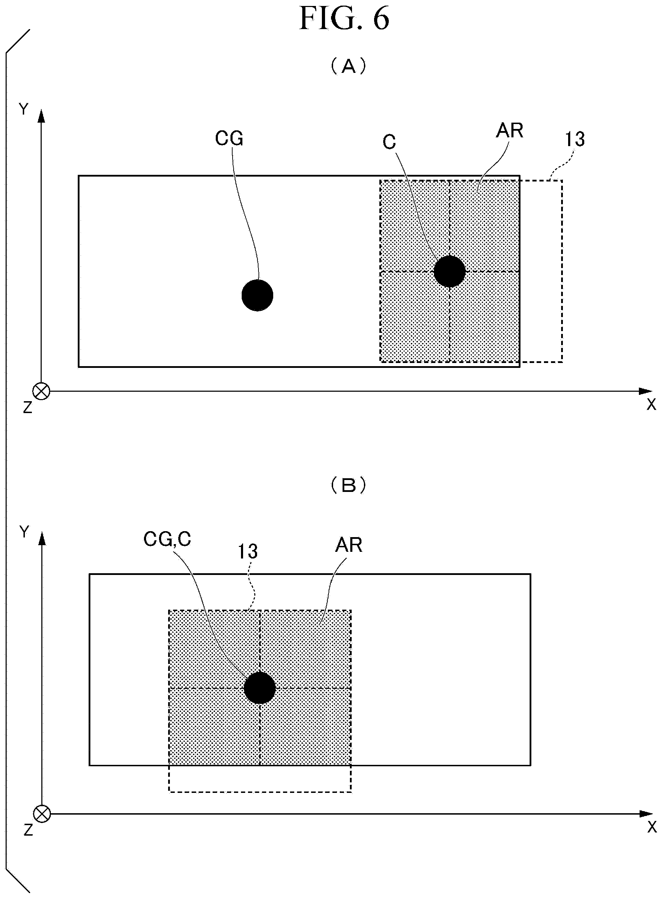

Next, the holding state determiner 72 compares the adsorption center position acquired in step S112 and the position based on the center of gravity acquired in step S114 with each other to determine whether or not a deviation in these positions in the horizontal direction is within a predetermined distance (step S116). Fig. 6 is a diagram illustrating a position based on the center of gravity. The coordinates detector 62 acquires the position of the center of gravity of the piece of cargo M from the force sensor and detects the position of two-dimensional coordinates corresponding to the acquired center of gravity of the piece of cargo M as a position CG. In addition, the holding state determiner 72 determines whether or not a deviation in the horizontal direction of the position CG and an adsorption center position C in a target region AR including the adhesive discs 13a in contact with the piece of cargo M which is acquired from the adsorption position detector 52 is within a predetermined distance. The positional deviation within the predetermined distance refers to an upper limit value of a deviation allowable when transporting the piece of cargo M and means that, for example, the adsorption center position C and the position CG is within the predetermined distance. Fig. 6(A) illustrates a state where a deviation in the adsorption center position C and the position CG is not within a predetermined distance. Fig. 6(B) illustrates a state where a deviation in the adsorption center position C and the position CG is within a predetermined distance.

The above-described predetermined distance may be changed in accordance with one or more elements among the weight of the piece of cargo M, an adsorption force, the area of the piece of cargo M on the top face (an XY plane). For example, in a case where the weight of the cargo is large, the predetermined distance is set to be shorter than in a case where the weight of the cargo is small. In addition, for example, in a case where the adsorption force is small, the predetermined distance is set to be shorter than in a case where the adsorption force is large. In addition, for example, in a case where the above-described area is large, the predetermined distance is set to be shorter than in a case where the area is small. This is because there is a strong possibility that the center of gravity may be shifted during the transport of the piece of cargo M in this case.

In a case where the positional deviation is within a predetermined distance, the holding state determiner 72 determines that a holding state is stable and proceeds to the process of step S120 to be described later. In a case where the positional deviation is not within the predetermined distance, the cargo regripping controller 82 returns the piece of cargo M to the original position where the piece of cargo M was disposed to generate a track for holding the piece of cargo M again so that the adsorption center position and the position based on the center of gravity of the piece of cargo M acquired from the holding state determiner 72 become closer to each other (step S118). In addition, the driving controller 78 holds the piece of cargo M again on the basis of the track generated by the cargo regripping controller 82. In addition, the processing may proceed to the process of step S100 or step S104 after the process of step S118. Thereby, the processing of one routine of this flowchart is terminated.

In addition, in the above-described flowchart, the control device 40 determines whether or not the piece of cargo M can be transported, on the basis of both a weight and a center of gravity, but the invention is not limited thereto. The transport device 40 may determine whether or not the piece of cargo M can be transported, on the basis of a weight or a center of gravity. For example, the processes of steps S104 to step S110 or the processes of steps S112 to S118 in the flowchart of Fig. 4 may be omitted.

In addition, the order of the processes in the flowchart of Fig. 4 may be changed. For example, in a case where the processes of steps S112 to S118 are performed after the process of step S102 and a determination result in the process of step S116 is affirmative, the processes of steps S104 to S110 may be performed.

In addition, the processes of gripping the cargo again in steps S110 and S118 may be integrated into one process and may be performed after the determination in steps S108 and S116. For example, in a case where the holding state determiner 72 compares the adsorption force acquired in step S104 and the weight acquired in step S106 with each other to determine in step S108 whether or not the adsorption force is sufficiently large, this determination result is stored in the storage 90. Further, in step S116, the holding state determiner 72 compares the adsorption center position acquired in step S112 and the position based on the center of gravity acquired in step S114 with each other. In a case where the holding state determiner determines in step S116 whether or not a positional deviation in these positions in the horizontal direction is within a predetermined distance, the determination result is stored in the storage 90.

The controller 70 performs processes (A) to (D) on the basis of, for example, the above-described determination result stored in the storage 90. (A) In a case where the determination results in steps S108 and S116 are affirmative, the processing proceeds to the process of step S120. (B) In a case where determination result in the step S108 is affirmative and the determination result in step S116 is negative, the controller 70 executes a process of gripping the piece of cargo M again so that the adsorption center position and the position based on the center of gravity of the piece of cargo M become closer to each other.

(C) In a case where the determination result in step S108 is negative and the determination result in step S116 is affirmative, the controller 70 executes a process of gripping the piece of cargo M again so that the adsorption center position and the position based on the center of gravity of the piece of cargo M become closer to each other or so that a state where a deviation in the horizontal direction of the adsorption center position acquired in step S112 and the position based on the center of gravity acquired in step S114 is within a predetermined distance is maintained. (D) In a case where the determination result in step S108 is negative and the determination result in step S116 is negative, the controller 70 executes a process of gripping the piece of cargo M again so that the adsorption center position and the position based on the center of gravity of the piece of cargo M become closer to each other.

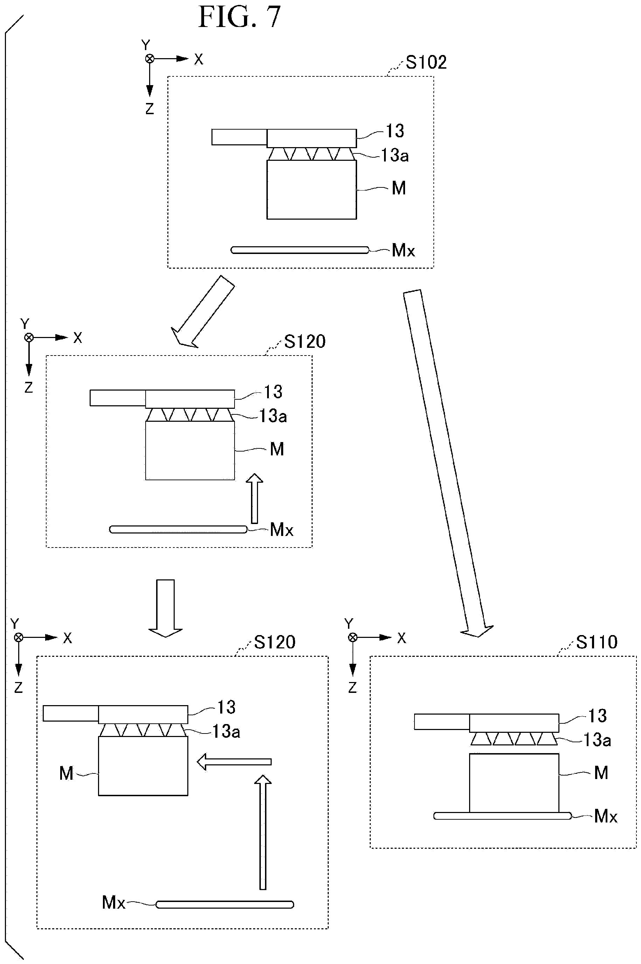

Fig. 7 is a diagram illustrating a portion of the holding state determination process (the processes of steps S104 to S110). In the example illustrated in the drawing, it is assumed that the piece of cargo M is disposed on the upper surface of cargo Mx different from an object to be transported. The control device 40 acquires an adsorption force for adsorbing the piece of cargo M and the weight of the piece of cargo M in a state where the piece of cargo M is lifted up to a predetermined height from the piece of cargo Mx (step S102, an upper portion of Fig. 7) (step S104, 106). In a case where the adsorption force is sufficiently large with respect to the weight of the piece of cargo M and other conditions (step S116) to be described later are satisfied, the control device 40 starts an operation of transporting the piece of cargo M in a direction vertically upward (step S120, a middle portion of Fig. 7). Thereafter, the control device 40 lifts up the piece of cargo M by a predetermined height and then transports the piece of cargo M toward the first conveyor 16 (step S120, a lower left portion of Fig. 7). On the other hand, in a case where the adsorption force is not sufficiently large with respect to the weight of the piece of cargo M, the control device 40 returns the piece of cargo M to the original position (step S110, a lower right portion of Fig. 7).

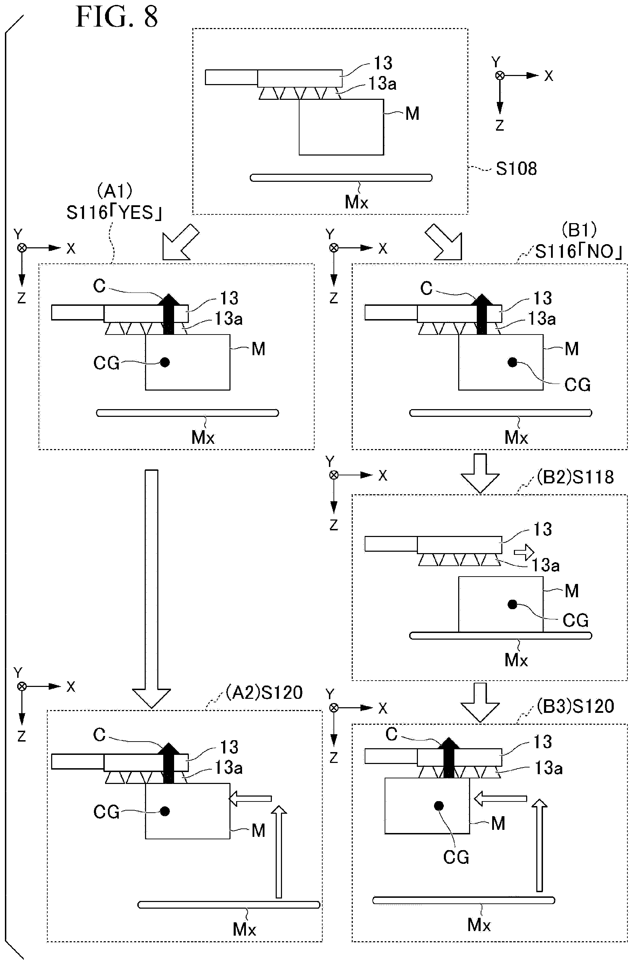

Fig. 8 is a diagram illustrating a portion (the processes of steps S112 to S118) of the holding state determination process. In the example of Fig. 8, it is assumed that the piece of cargo M to be transported is lifted up in a state where a portion of the upper surface of the piece of cargo M and a predetermined adhesive disc 13a among the plurality of adhesive discs 13a are in contact with each other and the determination result in step S108 is affirmative (step S108, an upper portion of Fig. 8). In this case, the control device 40 acquires an adsorption center position C and a position CG based on the center of gravity of the piece of cargo M, and determines whether or not a positional deviation in these positions is within a predetermined distance. In a case where it is determined that the positional deviation is within the predetermined distance ("YES" in step S116, Fig. 8(A1)), the control device 40 lifts up the piece of cargo M by a predetermined height and then transports the piece of cargo M toward the first conveyor 16 (step S120, Fig. 8(A2)). On the other hand, in a case where it is determined that the positional deviation is not within the predetermined distance ("NO" in step S116, Fig. 8(B1)), the control device 40 brings the adsorption center position C and the position CG based on the center of gravity of the piece of cargo M close to each other to correct the position of the holder 13 (step S118, Fig. 8(B2)) and then transports the piece of cargo M toward the first conveyor 16 (step S120, Fig. 8(B3)).

Here, in a case where a general transport device adsorbs and transports the piece of cargo M, it is not possible to confirm whether the holder 13 is holding the cargo in a stable state or the holder 13 is holding the cargo in an unstable state. On the other hand, the transport device 1 according to this embodiment compares an adsorption force of the holder 13 and the weight of the piece of cargo M with each other and further compares an adsorption center position and a position based on the center of gravity of the piece of cargo M with each other to determine whether or not the holder 13 is holding the piece of cargo M in a stable state. In this manner, the transport device 1 according to this embodiment can perform determination from the viewpoint of a weight and a position to determine whether or not a holding state of the piece of cargo M is stable with a higher level of accuracy and transports the piece of cargo M in a case where the holding state is stable. As a result, the transport device 1 can transport the piece of cargo M in a stable holding state.

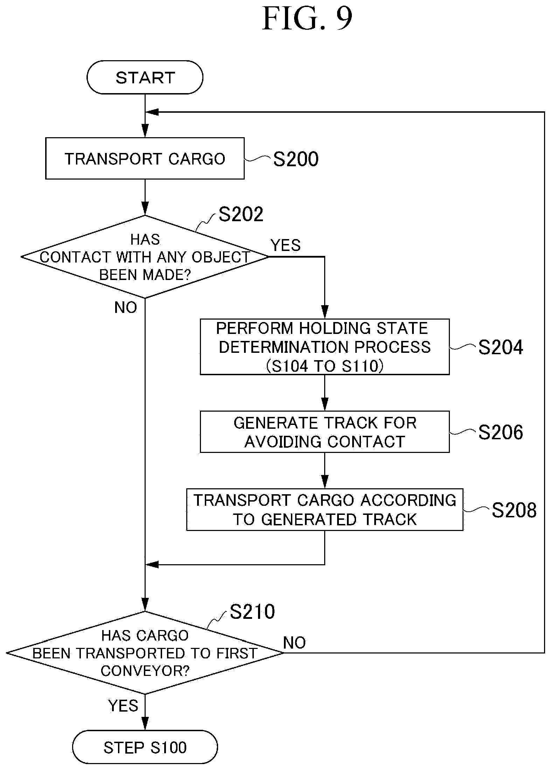

Fig. 9 is a flowchart illustrating a flow of a transport process (step S120 in Fig. 4). First, the driving controller 78 controls the arm driver 12d to control the arm 12 so as to transport the piece of cargo M to the first conveyor 16 (step S200). Next, the contact detector 64 determines whether or not the piece of cargo M being transported, the holder 13, or the arm 12 and any one object are in contact with each other on the basis of a detection result of the force sensor 15 (step S202). The object is an object which serves as an obstacle when the piece of cargo M is transported. The object is, for example, the box palette 3 or the piece of cargo M different from an object to be transported. For example, in a case where a detected value detected by the force sensor 15 changes largely (or changes by a predetermined value or more), as compared with a previous detected value, the contact detector 64 determines that contact with the object has been made. In a case where it is not detected that contact with the object has been made, the processing proceeds to the process of step S210.

In a case where it is detected that contact with the object has been made, the control device 40 executes a portion of the holding state determination process (for example, the processes of steps S104 to S110 and/or the processes of steps S112 to S118). Thereby, even when a state where the holder 13 is holding the piece of cargo M becomes unstable in a case where contact with the object is made, it is possible to hold the piece of cargo M again, and thus the object M is held in a stable state. In addition, the process of step S204 (holding state determination process) may be omitted.

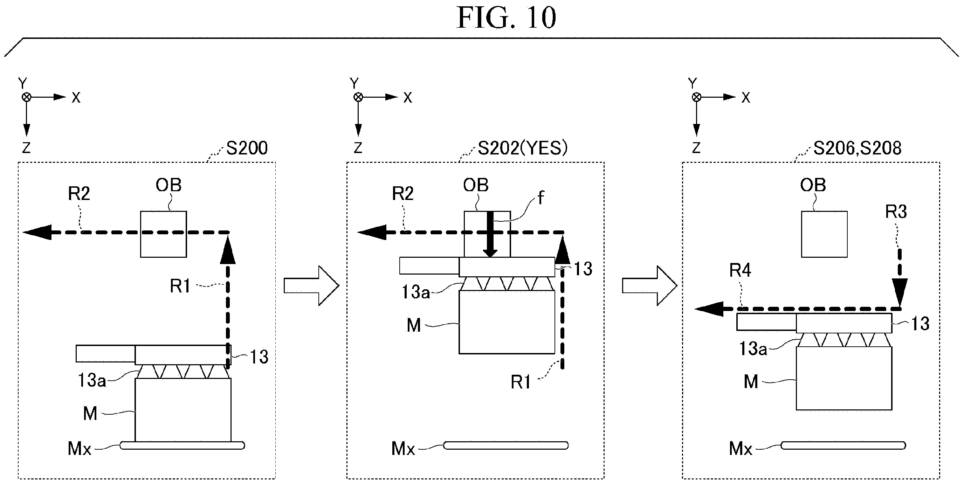

Next, the cargo regripping controller 82 generates a track for avoiding contact with an object (step S206), and the driving controller 78 transports the piece of cargo M along the generated track (step S208). Fig. 10 is a diagram illustrating a state where the piece of cargo M is transported along a track for avoiding contact with an object. For example, in step S200, it is assumed that control is performed so that the holder 13 performs transport along tracks R1 and R2 generated by the controller 70. In this case, it is assumed that there is an object OB and the holder 13 and the object OB come into contact with each other when the holder 13 transports the piece of cargo M along the track R1. In this case, the force sensor 15 detects that a force f has been applied from a direction of the top face of the holder 13. Further, in step S202, the contact detector 64 detects contact between the holder 13 and the object OB using information of the force f acquired from the force sensor 15. In addition, the operation track controller 74 acquires a position where the object OB is estimated to be present from the contact detector 64 to generate tracks R3 and R4 for avoiding the object OB and transporting the piece of cargo M to a predetermined position. In addition, the driving controller 78 performs control such that the holder 13 transports the piece of cargo M along the generated tracks R3 and R4. Thereby, the piece of cargo M is transported to the first conveyor 16 while avoiding the object OB.

Next, the controller 70 determines whether or not the piece of cargo M has been transported to the first conveyor 16 (step S210). The processing returns to the process of step S200 in a case where the piece of cargo M has not been transported to the first conveyor 16, and the processing of this flowchart is terminated in a case where the piece of cargo M has been transported to the first conveyor 16.

Through the above-described process, the transport device 1 can transport the piece of cargo M to the first conveyor 16 while avoiding an object serving as an obstacle when the piece of cargo M is transported.

According to at least one embodiment described above, it is possible to transport cargo M in a stable holding state by including the holder 13 holding the piece of cargo M, the arm 12 connected to the holder 13 and moving the holder 13, the force sensor 15, provided in the vicinity of a connection location where the holder 13 and the arm 12 are connected to each other, which detects a force applied to the vicinity of the connection location, a first acquirer (the adsorption force detector 50, the adsorption position detector 52) acquiring holding information indicating a holding state of the holder 13 holding the piece of cargo M, and the controller 70 causing the arm 12 to transport the piece of cargo M in a case where it is determined that the arm 12 is caused to transport the piece of cargo M, on the basis of holding information indicating a holding state of the holder 13 which is acquired by the first acquirer and detection results of the force sensor 15.

Although some embodiments of the invention have been described above, those embodiments are described as examples, and do not intend to limit the scope of the invention. Those embodiments may be embodied in other various modes, and may be variously omitted, substituted, and modified without departing from the scope of the invention. Those embodiments and modification thereof are within the scope and the gist of the invention, and are within the scope of the invention described in the scope of claims and the equivalent thereof.

**Claims**

1. A transport device comprising:

   a holder configured to hold cargo;

   a driver configured to be connected to the holder and to move the holder;
   a force sensor configured to be provided in a vicinity of a connection location where the holder and the driver are connected to each other and to detect a force applied to the vicinity of the connection location;
   a first acquirer configured to acquire holding information indicating a holding state of the holder holding the cargo; and
   a controller configured to cause the driver to transport the cargo in a case where it is determined that the driver is caused to transport the cargo, on the basis of the holding information indicating a holding state of the holder which is acquired by the first acquirer and detection results of the force sensor.

2. The transport device according to claim 1, further comprising:

   a second acquirer configured to acquire the weight of the cargo on the basis of the detection results of the force sensor,
   wherein the first acquirer acquires a holding force of the holder as holding information indicating the holding state, and
   the controller compares the weight of the cargo acquired by the second acquirer and the holding force of the holder with each other to determine whether or not the driver is caused to transport the cargo using the holding force of the holder.

3. The transport device according to claim 2, wherein the controller determines that the driver is caused to transport the cargo in a case where the holding force of the holder is equal to or greater than a threshold value which is set in response to the weight of the cargo.

4. The transport device according to claim 3, wherein, in a case where it is determined that the driver is caused not to transport the cargo, the controller controls the driver and the holder so as to hold the cargo again after the holding of the cargo is terminated.

5. The transport device according to claim 1, further comprising:

   a third acquirer configured to acquire a position based on the center of gravity of the cargo on the basis of detection results of the force sensor,
   wherein the first acquirer acquires a range over which the holder and the cargo are in contact with each other as holding information indicating the holding state, and
   the controller compares the position based on the center of gravity of the cargo acquired by the third acquirer and the range over which the holder and the cargo are in contact with each other to determine whether or not the driver is caused to transport the cargo in a state where the range over which the holder and the cargo are in contact with each other is maintained.

6. The transport device according to claim 5, wherein the controller determines that the driver is caused to transport the cargo in a case where a deviation in a horizontal direction of the position based on the center of gravity of the cargo acquired by the third acquirer and a reference position in a range over which the holder and the cargo are in contact with each other is within a predetermined distance.

7. The transport device according to claim 5, wherein, in a case where it is determined that the driver is caused not to transport the cargo, the controller controls the holder and the driver such that a reference position of the range over which the holder and the cargo are in contact with each other after the holding of the cargo is terminated is brought closer to the position based on the center of gravity of the cargo in a horizontal direction than a reference position in a range over which the holder and the cargo are in contact with each other before the holding of the cargo is terminated, and then the cargo is held again.

8. The transport device according to claim 1, further comprising:

   a detector configured to detect a force applied to the holder from the outside on the basis of detection results of the force sensor in a period in which the driver is controlled and the cargo is transported along a predetermined track, wherein the controller controls the driver such that the driver transports the cargo along a track obtained by changing the predetermined track on the basis of results detected by the detector.

9. The transport device according to claim 1, further comprising:

   a second acquirer configured to acquire the weight of the cargo on the basis of detection results of the force sensor and a third acquirer which acquires a position based on the center of gravity of the cargo on the basis of detection results of the force sensor, wherein the first acquirer acquires a holding force of the holder and a range over which the holder and the cargo are in contact with each other as holding information indicating the holding state, and the controller compares the weight of the cargo acquired by the second acquirer and the holding force of the holder with each other to determine whether or not the driver is caused to transport the cargo using the holding force of the holder, and compares the position based on the center of gravity of the cargo acquired by the third acquirer and the range over which the holder and the cargo are in contact with each other to determine whether or not the driver is caused to transport the cargo in a state where the range over which the holder and the cargo are in contact with each other is maintained.

10. The transport device according to claim 9, wherein the controller determines that the driver is caused to transport the cargo in a case where the holding force of the holder is equal to or greater than a threshold value which is set in response to the weight of the cargo and a deviation in a horizontal direction of the position based on the center of gravity of the cargo acquired by the third acquirer and a reference position of the range over which the holder and the cargo are in contact with each other is within a predetermined distance.

11. The transport device according to claim 9, wherein the controller determines that the driver is caused not to transport the cargo in a case where the holding force of the holder is less than a threshold value which is set in response to the weight of the cargo or a deviation in a horizontal direction of the position based on the center of gravity of the cargo acquired by the third acquirer and a reference position of the range over which the holder and the cargo are in contact with each other exceeds a predetermined distance.

12. The transport device according to claim 11, wherein, in a case where it is determined that the driver is caused not to transport the cargo, the controller controls the driver and the holder so as to terminate the holding of the cargo and then hold the cargo again at a position different from a position where the cargo is held before the termination.

13. The transport device according to claim 12, wherein the controller brings a reference position of the range over which the holder and the cargo are in contact with each other after the holding of the cargo is terminated closer to the position based on the center of gravity of the cargo in a horizontal direction than a reference position in a range over which the holder and the cargo are in contact with each other before the holding of the cargo is terminated, and then holds the cargo again.

14. A transport method comprising:

   acquiring holding information indicating a holding state of cargo of a holder holding the cargo; determining whether or not the cargo is transported to a driver on the basis of the acquired holding information indicating the holding state of the holder and detection results of a force sensor provided in a vicinity of a connection location where the driver, connected to the holder and moving the holder, and the holder are connected to each other, the force sensor detecting a force applied to the vicinity of the connection location; and

transporting the cargo by the driver in a case where it is determined that the driver is caused to transport the cargo.

15. A transport program causing a computer to perform steps comprising:

acquiring holding information indicating a holding state of cargo of a holder holding the cargo; determining whether or not the cargo is transported to a driver on the basis of the acquired holding information indicating the holding state of the holder and detection results of a force sensor provided in a vicinity of a connection location where the driver, connected to the holder and moving the holder, and the holder are connected to each other, the force sensor detecting a force applied to the vicinity of the connection location; and

transporting the cargo by the driver in a case where it is determined that the driver is caused to transport the cargo.

# FIG. 1

(A)

(B)

# FIG. 2

## FIG. 3

**40**

**18** CARGO DETECTOR → **42** RECOGNIZER → **70**

**70**
- **72** HOLDING STATE DETERMINER
- **74** OPERATION TRACK CONTROLLER
- **76** OPERATION SPEED CONTROLLER
- **78** DRIVING CONTROLLER
- **80** CONVEYOR CONTROLLER
- **82** CARGO REGRIPPING CONTROLLER
- **84** PUMP CONTROLLER

**14** PRESSURE SENSOR

**50** ADSORPTION FORCE DETECTOR
**52** ADSORPTION POSITION DETECTOR

**15** FORCE SENSOR

**60** WEIGHT DETECTOR
**62** COORDINATES DETECTOR
**64** CONTACT DETECTOR

**12** ARM
**12d** ARM DRIVER

**13** HOLDER
**13a** ADHESIVE DISC

**16** FIRST CONVEYOR

**17** SECOND CONVEYOR

**19** VACUUM PUMP

**92** DETERMINATION MAP → **90** STORAGE

EP 3 508 314 A1

FIG. 4

START

RECOGNIZE POSITION OF
CARGO TO BE TRANSPORTED ⌐S100
FROM IMAGE

HOLDING STATE DETERMINATION
PROCESS

HOLD CARGO TO BE TRANSPORTED
(LIFT UP CARGO TO PREDETERMINED HEIGHT) ⌐S102

ACQUIRE ADSORPTION FORCE ⌐S104

ACQUIRE WEIGHT OF CARGO ⌐S106

S108

IS
ADSORPTION FORCE GREATER — NO
THAN WEIGHT?

YES

S112

ACQUIRE ADSORPTION
CENTER POSITION

S110

RETURN CARGO TO
GRIP CARGO AGAIN

S114

ACQUIRE POSITION BASED ON
CENTER OF GRAVITY OF CARGO

S116

IS DEVIATION
NO      IN ADSORPTION CENTER POSITION
AND POSITION BASED ON CENTER OF GRAVITY
OF CARGO WITHIN PREDETERMINED
DISTANCE?

GRIP CARGO
AGAIN        ⌐S118        YES

PERFORM TRANSPORT
PROCESS        ⌐S120

RETURN

# FIG. 5

<u>92</u>

ADSORPTION FORCE [N]

SUFFICIENTLY LARGE (STABLE)

Th

WEIGHT OF CARGO [kg]

# FIG. 6

## （A）

## （B）

# FIG. 7

FIG. 8

# FIG. 9

```
        ┌──────────┐
        │  START   │
        └──────────┘
             │
             ▼
   ┌────────────────────┐
   │  TRANSPORT CARGO   │──── S200
   └────────────────────┘
             │
             ▼                    S202
          ╱─────────╲
         ╱    HAS    ╲      YES
        ╱ CONTACT WITH ╲─────────────┐
        ╲ ANY OBJECT   ╱              │
         ╲ BEEN MADE? ╱               │
          ╲─────────╱                 ▼
             │ NO          ┌────────────────────────┐
             │             │  PERFORM HOLDING STATE │
             │             │  DETERMINATION PROCESS │──── S204
             │             │    (S104 TO S110)      │
             │             └────────────────────────┘
             │                        │
             │                        ▼
             │             ┌────────────────────────┐
             │             │  GENERATE TRACK FOR    │──── S206
             │             │   AVOIDING CONTACT     │
             │             └────────────────────────┘
             │                        │
             │                        ▼
             │             ┌────────────────────────┐
             │             │ TRANSPORT CARGO        │──── S208
             │             │ ACCORDING TO           │
             │             │ GENERATED TRACK        │
             │             └────────────────────────┘
             │                        │
             ▼◄───────────────────────┘
          ╱─────────╲            S210
         ╱ HAS CARGO ╲
        ╱ BEEN TRANS- ╲     NO
        ╲ PORTED TO   ╱──────────────┐
         ╲ FIRST      ╱               │
          ╲CONVEYOR? ╱                │ (back to START)
           ╲───────╱                 
             │ YES
             ▼
        ┌──────────┐
        │ STEP S100│
        └──────────┘
```

FIG. 10

## INTERNATIONAL SEARCH REPORT

| | International application No. |
|---|---|
| | PCT/JP2017/033250 |

A. CLASSIFICATION OF SUBJECT MATTER
*B25J13/00*(2006.01)i, *B65G61/00*(2006.01)i

According to International Patent Classification (IPC) or to both national classification and IPC

B. FIELDS SEARCHED

Minimum documentation searched (classification system followed by classification symbols)
B25J13/00, B65G61/00

Documentation searched other than minimum documentation to the extent that such documents are included in the fields searched
Jitsuyo Shinan Koho       1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2014-210311 A   (Fanuc Ltd.), | 1,5-7,14-15 |
| Y | 13 November 2014 (13.11.2014), | 2-4,8-13 |
| | paragraphs [0027] to [0045]; fig. 1 to 3 | |
| | & US 2014/0316572 A1 | |
| | paragraphs [0048] to [0070]; fig. 1 to 3 | |
| | & DE 102014005434 A1     & CN 104108104 A | |
| | | |
| Y | JP 6-48576 A  (Sekisui Chemical Co., Ltd.), | 2-4,9-13 |
| | 22 February 1994 (22.02.1994), | |
| | paragraph [0003] | |
| | (Family: none) | |
| | | |
| Y | JP 2006-167820 A  (Toyota Motor Corp.), | 8 |
| | 29 June 2006 (29.06.2006), | |
| | paragraphs [0008] to [0035]; fig. 1 to 7 | |
| | (Family: none) | |

☒ Further documents are listed in the continuation of Box C.        ☐ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 23 October 2017 (23.10.17) | 31 October 2017 (31.10.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2017/033250

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-132521 A (Toshiba Corp.),<br>25 July 2016 (25.07.2016),<br>paragraphs [0017] to [0024]; fig. 1, 6A to 7B<br>& US 2016/0207195 A1<br>paragraphs [0039] to [0046]; fig. 1, 6A to 7B | 1-15 |
| A | WO 2016/010968 A1 (GOOGLE INC.),<br>21 January 2016 (21.01.2016),<br>paragraphs [0089] to [0103]; fig. 4A to 4D<br>& JP 2017-520417 A   & US 9205558 B1 | 1-15 |

Form PCT/ISA/210 (continuation of second sheet) (January 2015)

## REFERENCES CITED IN THE DESCRIPTION

**Patent documents cited in the description**

• JP 2007130711 A